**Europäisches Patentamt**

**European Patent Office**

**Office européen des brevets**

(19)

(11) Veröffentlichungsnummer : **0 111 469**
**B1**

(12)

# EUROPÄISCHE PATENTSCHRIFT

(45) Veröffentlichungstag der Patentschrift :
04.05.88

(51) Int. Cl.⁴ : **B 29 B 13/00**

(21) Anmeldenummer : 83890209.6

(22) Anmeldetag : 14.11.83

(54) **Verfahren und Vorrichtung zum Vorschäumen von Kunststoffen.**

(30) Priorität : **15.11.82 AT 4154/82**

(43) Veröffentlichungstag der Anmeldung :
**20.06.84 Patentblatt 84/25**

(45) Bekanntmachung des Hinweises auf die Patenterteilung : **04.05.88 Patentblatt 88/18**

(84) Benannte Vertragsstaaten :
**BE CH DE FR GB IT LI NL SE**

(56) Entgegenhaltungen :
**FR-A- 1 453 691**
**FR-A- 2 032 932**
**FR-A- 2 151 098**
**FR-A- 2 235 775**
**FR-A- 2 381 614**
**US-A- 3 577 360**
**US-A- 3 639 551**
**US-A- 3 834 038**
**US-A- 4 272 469**

(73) Patentinhaber : **Hirsch, Kurt**
**Linsengasse 55**
**A-9020 Klagenfurt (Kärnten) (AT)**

(72) Erfinder : **Hirsch, Kurt**
**Linsengasse 55**
**A-9020 Klagenfurt (Kärnten) (AT)**

(74) Vertreter : **Beer, Otto, Dipl.-Ing. et al**
**Lindengasse 8**
**A-1071 Wien (AT)**

## Beschreibung

Die Erfindung betrifft ein Verfahren zum Vorschäumen von ein Treibmittel enthaltenden Kunststoffen, wie beispielsweise Polystyrol, bei dem man dem körnigen Kunststoff durch Wasserdampf Wärme zuführt und unter Rühren aufschäumt, worauf die vorgeschäumten Kunststoffteilchen getrocknet und unter Vakuum stabilisiert werden.

Derzeit wird Polystyrol, das beispielsweise Pentan als Treibmittel enthält, in drei Etappen vorgeschäumt, wobei die drei Stufen dann wiederholt werden müssen, wenn besonders niedrige Raumgewichte angestrebt werden. Die drei Etappen bestehen einmal im Aufschäumen des Kunststoffmaterials mit Dampf, im nachfolgenden Trocknen des vorgeschäumten Kunststoffmaterials mit Heißluft und dem abschließenden Stabilisieren des vorgeschäumten Kunststoffmaterials in Silos. Bis zur Weiterverarbeitung des vorgeschäumten Kunststoffes zu den gewünschten Endprodukten vergeht beim bekannten Vorschäumen ein Zeitraum von etwa 8 bis 12 Stunden.

Ein weiterer Nachteil des bekannten Verfahrens besteht darin, daß die heißen, vorgeschäumten Kunststoffteilchen außerordentlich empfindlich sind und die Gefahr besteht, daß sie vor dem Stabilisieren, bei dem im wesentlichen die Kunststoffteilchen unter Verfestigung ihrer Außenschale abgekühlt und freies Treibgas entfernt wird, in sich mehr oder weniger stark zusammenfallen, so daß der Aufschäumeffekt in größerem oder kleinerem Ausmaß wieder verloren geht.

Aus der US-A-4 272 469 ist ein Verfahren zum Vorschäumen bekannt, bei dem die ein Treibmittel enthaltenden Kunststoffteilchen in einer Kammer expandiert und getrocknet und dann in der Atmosphäre gelagert werden. Diese eine Kammer kann auch evakuiert werden, um das Treibmittel weitgehend zu entfernen.

Der Erfindung liegt die Aufgabe zugrunde, ein Verfahren zum Vorschäumen Von Kunststoff anzugeben, das in kürzerer Zeit als die bekannten Verfahren ausführbar ist und bei dem keine Gefahr des Kollabierens der vorgeschäumten Kunststoffteilchen vor deren Stabilisierung besteht.

Erfindungsgemäß wird dies bei einem Verfahren der eingangs genannten Gattung dadurch erreicht, daß man die vorgeschäumten Kunststoffteilchen ohne Zwischenlagerung aus einem abgeschlossenen Vorschäumraum in einen Trocken- und Stabilisierungsraum überführt, daß man in diesem Raum während des Trocknens und Stabilisierens einen Unterdruck aufrecht hält und daß man die derart vorgeschäumten, getrockneten und stabilisierten Kunststoffteilchen vorzugsweise unmittelbar der weiteren Verarbeitung zuführt.

Bei Anwendung des erfindungsgemäßen Verfahrens werden die vorgeschäumten Kunststoffteilchen vor Einwirkungen von außen geschützt aus der Vorschäumkammer in den Trocken- und Stabilisierungsraum übergeführt. Durch den im Trocken- und Stabilisierungsraum aufrecht erhaltenen Unterdruck geht der Trocken- und Stabilisierungsprozeß der vorgeschäumten Kunststoffteilchen rasch und dennoch schonend vor sich.

Bevorzugt kann beim erfindungsgemäßen Verfahren so vorgegangen werden, daß man im Trocken- und Stabilisierungsraum noch vor dem Einführen der vorgeschäumten Kunststoffteilchen ein Vakuum erzeugt, wobei man das Vakuum während des Trocknens und Stabilisierens vorzugsweise erhöht. Bei dieser Verfahrensvariante ist die Gefahr des Kollabierens der vorgeschäumten heißen Kunststoffteilchen noch weiter vermindert.

Nach einer Variante des erfindungsgemäßen Verfahrens rührt man die vorgeschäumten Kunststoffteilchen während des Trocknens und Stabilisierens.

Ein besonders schonendes Überführen der vorgeschäumten Kunststoffteilchen in den Trocken- und Stabilisierungsraum ergibt sich erfindungsgemäß, wenn man die vorgeschäumten Kunststoffteilchen aus dem Vorschäumraum in den Raum, in dem sie getrocknet und stabilisiert werden, frei fallen läßt.

Eine Vorrichtung zur Durchführung des Verfahrens mit einer Vorschäumkammer, die mit einer Öffnung zum Beschicken mit körnigem Kunststoff, einer Dampfeinlaßöffnung, einem Überdruckventil, einem Rührwerk und einer Austragöffnung für die vorgeschäumten Kunststoffteilchen ausgerüstet ist, kann erfindungsgemäß dadurch gekennzeichnet sein, daß unter der Vorschäumkammer eine Kammer mit Beschickungsöffnung und Austragöffnung vorgesehen ist, in welcher der vorgeschäumte Kunststoff getrocknet und stabilisiert wird, daß die Beschickungsöffnung der Kammer unmittelbar unter der Austragöffnung der Vorschäumkammer angeordnet ist, daß die Beschickungsöffnung z. B. mittels eines Schiebers druckdicht verschließbar ist, daß in der Kammer ein Rührwerk vorgesehen ist und daß an die Kammer eine Vakuumpumpe (Leitung) angeschlossen ist.

In Weiterbildung der erfindungsgemäßen Vorrichtung kann sich diese dadurch auszeichnen, daß in der Kammer im Abstand von der Wand derselben ein Käfig zur Aufnahme des zu trocknenden und stabilisierenden Kunststoffes angeordnet ist.

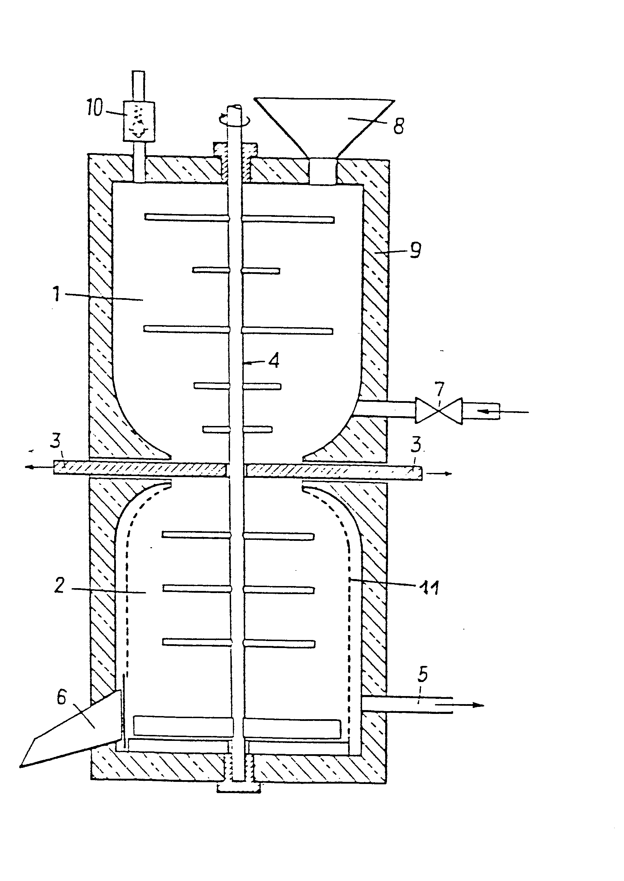

Weitere Einzelheiten der Erfindung ergeben sich aus der nachstehenden Beschreibung des in der Zeichnung schematisch wiedergegebenen Ausführungsbeispieles einer Vorrichtung zur Durchführung des erfindungsgemäßen Verfahrens.

Die erfindungsgemäße Vorrichtung weist in einem gemeinsamen, isolierten Gehäuse 9 eine Vorschäumkammer 1 und eine Stabilisierungs- und Trocknungskammer 2 auf. Der Übergang von der Schäumkammer 1 zur Stabilisierungs- und Trocknungskammer 2 kann durch einen Schieber 3 wahlweise geöffnet oder geschlossen werden.

Hiezu können z. B. Druckmittelzylinder vorgesehen sein.

Die Vorschäumkammer 1 ist mit einem Beschickungstrichter 8, einer Dampfeinlaßleitung 7 und einem Überdruckventil 10 ausgerüstet. Im Inneren der Vorschäumkammer 1 ist ein Rührwerk 4 vorgesehen, das sich auch in die Stabilisierungs- und Trocknungskammer 2 erstreckt. Zum Antreiben des Rührwerkes 4 ist ein nicht gezeigter Getriebemotor vorgesehen.

Die Stabilisierungs- und Trocknungskammer 2 weist einen im Abstand von der Wand des Gehäuses 9 angeordneten käfigartigen, d. h. luftdurchlässigen Behälter 11 auf. In diesem Behälter 11 gelangen die aus der Vorschäumkammer kommenden vorgeschäumten Kunststoffteilchen, um dort stabilisiert und getrocknet zu werden.

Weiters ist die Stabilisierungs- und Trocknungskammer 2 mit einem Materialaustrag 6 und einem Anschluß 5 für eine Vakuumpumpe ausgerüstet, so daß in der Stabilisierungs- und Trocknungskammer 2 ein Unterdruck erzeugt werden kann.

Bei der Durchführung des erfindungsgemäßen Verfahrens wird wie folgt vorgegangen :

Der vorzuschäumende Kunststoff, z. B. Polystyrol, wird in die Vorschäumkammer 1 eingefüllt und durch über die Leitung 7 eingeleiteten Dampf erhitzt und schäumt dabei auf. Die Vorschäumzeit und Temperatur wird dabei so gewählt, daß nach Beendigung des Vorschäumens die Kunststoffteilchen noch einen Rest an Schäumfähigkeit behalten.

Nach der Beendigung des Vorschäumvorganges wird der Schieber 3 geöffnet und das vorgeschäumte Kunststoffmaterial in die Stabilisierungs- und Trocknungskammer eingeführt. Die Kammer 2 wird auf die Trocknungstemperatur erwärmt, wobei ein wesentlicher Teil der Wärme durch den Wärmeinhalt des aus der Kammer 1 in die Kammer 2 übergeführten Materials (Kunststoffteilchen, heißes Treibgas und heißer Wasserdampf) aufgebracht wird. Zusätzlich wird nun über die Leitung 5 in der Kammer 2 ein Unterdruck erzeugt bzw. ein allenfalls vorher erzeugter Unterdruck erhöht, wodurch die Stabilisierung und die Trocknung des vorgeschäumten Kunststoffmaterials besonders rasch und gleichzeitig schonend vor sich geht.

Während in der Kammer 2 Kunststoffmaterial stabilisiert und getrocknet wird, kann in der Vorschäumkammer 1 eine neue Charge Kunststoffmaterial vorgeschäumt werden.

Nachdem die Stabilisierung und Trocknung beendet ist, wird das vorgeschäumte Kunststoffmaterial über die Austragöffnung 6 aus der Kammer 2 ausgebracht, nachdem ein vor der Austragöffnung 6 vorgesehener Schieber geöffnet wurde, und kann sofort weiter verarbeitet werden.

Mit dem erfindungsgemäßen Verfahren kann man das Vorschäumen, Trocknen und Stabilisieren von Kunststoffen in einem einzigen Gerät und ohne Ablagerungszeit durchführen. Man erzielt damit gegenüber den bekannten Vorschäumverfahren einschließlich der für die Trocknung und Stabilisierung notwendigen Zeiten Zeitersparnisse von über 85 %. Darüber hinaus ist das erfindungsgemäße Verfahren gegenüber dem bisher bekannten Verfahren energie-, platz- und materialsparend, da in einer einzigen Vorrichtung gearbeitet wird, so daß Wärmeverluste besonders gering sind.

Nachstehend wird ein Beispiel für das erfindungsgemäße Verfahren wiedergegeben :

10 kg eines Styrolpolymerisates (Korngröße 0,4 bis 1,6 mm, Schüttdichte 550-600 kg/m$^3$), das 7 % Pentan als Treibmittel enthält und einen Feuchtigkeitsinhalt von 0,5 % besitzt, wird in eine mit Rühreinrichtung versehene, durch Einblasen von Dampf auf eine Wandtemperatur von 80-90° C aufgeheizte Kammer (Kammer 1) eingetragen. Unter Rühren mit einer Rührerdrehzahl von 60 U/min wird 10 bis 60 sec lang vorexpandiert, wobei die Temperatur des Kunststoffes auf 100-120° C erhöht wird.

Am Ende des Vorexpandierens in der Kammer 1 wird diese bis auf einen Restdruck von 0,8 bar evakuiert. Die Stabilisierkammer (Kammer 2) wird auf einen Restdruck von 0,8 bar vorevakuiert. Hierauf wird das vorexpandierte Material durch Öffnen der Schieber aus der Kammer 1 in die Kammer 2 gebracht und dort 10-60 sec lang bei einer Temperatur von 50 bis 25° stabilisiert, wobei die Rühreinrichtung mit 60 U/min arbeitet und ein Druck von 0,8 bar aufrechtgehalten wird.

Während in Kammer 2 stabilisiert wird, wird in Kammer 1 eine neue Charge vorexpandiert.

Das mit einer Temperatur von etwa 25° C aus Kammer 2 ausgetragene, stabilisierte, vorgeschäumte Material hat ein Raumgewicht von 7 bis 9 kg/m$^3$ und eine mittlere Korngröße von 4 bis 8 mm.

Aufgrund der erfindungsgemäßen Arbeitsweise ergeben sich u. a. folgende Vorteile :

Die Wand der Kammer 1, die außen isoliert ist, erwärmt sich beim Vorexpandieren auf eine Temperatur zwischen 90 und 100°. Das Aufwärmen der Kammer verbraucht bei den Verfahren nach dem Stand der Technik, bei welchen zwischen den Vorexpandierstufen das gerade vorexpandierte Material stabilisiert wird, wobei sich die Kammer abkühlt, ca. 20 bis 30 % der Energie je Zyklus. Daher ist es von großem Interesse, den Heißraum möglichst immer auf hoher Temperatur zu halten und jeweils nur das neue Material mit Wärme zu beaufschlagen, um den Blähvorgang zu bewirken (Erfindung).

Bei herkömmlichen Verfahren wird das Erhitzen und das Stabilisieren in einer einzigen Kammer ausgeführt, was den erwähnten vermehrten Energieverbrauch von mindestens 20 bis 30 % erfordert.

Bei dem bekannten Verfahren verliert das aufgeblähte Material nach Austritt aus der Vorblähkammer 1 und beim Übergang in Trockenapparaturen überdies ca. 10 bis 15 % des bereits erreichten Volumens allein durch den atmosphärischen Druck. Diese verlorenen 15 % Volumen benötigen etwa 9 % des gesamten Energiebedarfes beim Schäumen. Dieses erreichte Volumen nicht zu verlieren, ist ein weiterer wesentlicher Vorteil der Erfindung, da der Übergang von der Kammer 1 in die Vakuumkammer 2 bereits unter Vakuum erfolgt und das Material keiner Druckbelastung ausgesetzt ist, bis es stabilisiert ist.

Mit der Erfindung wird erreicht, daß statt bisher 15 % höchstens 4 % der erreichten Vorblähung verloren gehen. Durch die besondere Ausbildung der Vakuumkammer ist sogar ein nochmaliges Aufblähen der Partikel möglich, da der restliche Dampf- und Wasserinhalt zwischen den Partikeln bereits unter 100° (je nach Vakuum) zur Verdampfung kommt.

Die Aufenthaltsdauer in der Vakuumkammer 2 ist gleich dem Zeitraum der Kammer 1, so daß als weiterer und wichtiger Vorteil mit ein- und demselben Rauminhalt der Vorblähkammer 1 die doppelte Kapazität erreicht wird, da diese zum Stabilisieren nicht mehr benötigt wird.

**Patentansprüche**

1. Verfahren zum Vorschäumen von ein Treibmittel enthaltenden Kunststoffen, wie beispielsweise Polystyrol, bei dem man dem körnigen Kunststoff durch Wasserdampf Wärme zuführt und unter Rühren aufschäumt, worauf die vorgeschäumten Kunststoffteilchen getrocknet und unter Unterdruck stabilisiert werden, dadurch gekennzeichnet, daß man die vorgeschäumten Kunststoffteilchen ohne Zwischenlagerung aus einem abgeschlossenen Vorschäumraum (1) in einen Trocken- und Stabilisierungsraum (2) überführt, daß man in diesem Raum (2) während des Trocknens und Stabilisierens einen Unterdruck aufrecht hält und daß man die derart vorgeschäumten, getrockneten und stabilisierten Kunststoffteilchen vorzugsweise unmittelbar der weiteren Verarbeitung zuführt.

2. Verfahren nach Patentanspruch 1, dadurch gekennzeichnet, daß man im Trocken- und Stabilisierungsraum (2) noch vor dem Einführen der vorgeschäumten Kunststoffteilchen ein Vakuum erzeugt, wobei man das Vakuum während des Trocknens und Stabilisierens vorzugsweise erhöht.

3. Verfahren nach Patentanspruch 1 oder 2, dadurch gekennzeichnet, daß man die vorgeschäumten Kunststoffteilchen während des Trocknens und Stabilisierens rührt.

4. Verfahren nach einem der Patentansprüche 1 bis 3, dadurch gekennzeichnet, daß man die vorgeschäumten Kunststoffteilchen aus dem Vorschäumraum (1) in den Raum (2), in dem sie getrocknet und stabilisiert werden, frei fallen läßt.

5. Vorrichtung zur Durchführung des Verfahrens nach den Patentansprüchen 1 bis 4 mit einer Vorschäumkammer (1), die mit einer Öffnung (8) zum Beschicken mit körnigem Kunststoff, einer Dampfeinlaßöffnung (7), einem Überdruckventil (10), einem Rührwerk (4) und einer Austragöffnung für die vorgeschäumten Kunststoffteilchen ausgerüstet ist, dadurch gekennzeichnet, daß unter der Vorschäumkammer (1) eine Kammer (2) mit Beschickungsöffnung und Austragöffnung (6) vorgesehen ist, in welcher der vorgeschäumte Kunststoff getrocknet und stabilisiert wird, daß die Beschickungsöffnung der Kammer (2) unmittelbar unter der Austragöffnung der Vorschäumkammer (1) angeordnet ist, daß die Beschickungsöffnung z. B. mittels eines Schiebers (3) druckdicht verschließbar ist, daß in der Kammer (2) ein Rührwerk (4) vorgesehen ist und daß an die Kammer (2) eine Vakuumpumpe (Leitung 5) angeschlossen ist.

6. Vorrichtung nach Patentanspruch 5, dadurch gekennzeichnet, daß in der Kammer (2) im Abstand von der Wand derselben ein Käfig (11) zur Aufnahme des zu trocknenden und stabilisierenden Kunststoffes angeordnet ist.

**Claims**

1. A method for the pre-foaming of plastics containing a motive substance, such as for example polystyrene, wherein heat is supplied through water vapour to the granular plastics material and foaming-up is carried out while stirring, after which the pre-foamed plastics particles are dried and stabilised at reduced pressure, characterised in that the pre-foamed plastics particles are transferred, without intermediate storage, from a closed pre-foaming chamber (1) into a drying and stabilising chamber (2), that a reduced pressure is maintained in this chamber (2) during the drying and stabilising, and that the plastics particles which have been pre-foamed, dried and stabilised in such a way are preferably passed on directly for further processing.

2. A method according to Claim 1, characterised in that, in the drying and stabilising chamber (2), a vacuum is produced before the introduction of the pre-foamed plastics particles, which vacuum is preferably increased during the drying and stabilising.

3. A method according to Claim 1 or 2, characterised in that the pre-foamed plastics particles are stirred during the drying and stabilising.

4. A method according to any one of Claims 1 to 3, characterised in that the pre-foamed plastics particles are allowed to drop freely out of the pre-foaming chamber (1) into the chamber (2) in which they are dried and stabilised.

5. Apparatus for carrying out the method according to Claims 1 to 4, comprising a pre-foaming chamber (1) which is provided with an opening (8) for charging with granular plastics material, a steam inlet opening (7), an excess-pressure valve (10), a stirrer (4) and a discharge opening for the pre-foamed plastics particles, characterised in that, beneath the pre-foaming chamber (1), a chamber (2) with a charging opening and a discharge opening (6) is provided, in which chamber the pre-foamed plastics material is dried and stabilised, that the charging opening of the chamber (2) is arranged immediately beneath the discharge opening of the pre-foaming chamber (1), that the charging opening is capable of being closed in a pressure-tight manner e. g., by means of a slider (3), that a stirrer (4) is provided in the chamber (2), and that a vacuum pump (line 5) is connected to the chamber (2).

6. Apparatus according to Claim 5, characterised in that, in the chamber (2) at a distance from the wall thereof, a cage (11) is arranged to receive the plastics material which is to be dried and stabilised.

## Revendications

1. Procédé de préexpansion de matières plastiques contenant un agent d'expansion, telles que par exemple du polystyrène, consistant à apporter par de la vapeur d'eau de la chaleur à la matière plastique en grains et à expanser cette dernière en remuant, après quoi, les particules de matière plastique préexpansées sont séchées et stabilisées sous vide partiel, caractérisé en ce que les particules de matière plastique préexpansées sont transférées sans stockage intermédiaire, d'une chambre de préexpansion close (1) dans une chambre de séchage et de stabilisation (2), en ce qu'une dépression est maintenue dans cette chambre pendant le séchage et la stabilisation et en ce que les particules de matière plastique ainsi préexpansées, séchées et stabilisées passent de préférence immédiatement au stade de la transformation ultérieure.

2. Procédé suivant la revendication 1, caractérisé en ce qu'un vide est réalisé dans la chambre de séchage et de stabilisation (2) avant l'introduction des particules de matière plastique préexpansées et en ce que ce vide est de préférence augmenté au cours du séchage et de la stabilisation.

3. Procédé suivant la revendication 1 ou 2, caractérisé en ce que les particules de matière plastique expansées sont remuées pendant le séchage et la stabilisation.

4. Procédé suivant l'une quelconque des revendications 1 à 3, caractérisé en ce que les particules de matière plastique préexpansées tombent en chute libre de la chambre de préexpansion (1) dans la chambre (2) où elles sont séchées et stabilisées.

5. Dispositif de mise en œuvre du procédé suivant les revendications 1 à 4 comprenant une chambre de préexpansion (1), équipée d'une ouverture d'alimentation (8) en matière plastique en grains, d'une conduite d'admission de vapeur (7), d'une soupape de surpression (10), d'un agitateur (4) et d'une ouverture de décharge des particules de matière plastique préexpansées, caractérisé en ce que, sous la chambre de préexpansion (1), est prévue une chambre (2) munie d'une ouverture d'alimentation et d'une ouverture de décharge (6), dans laquelle la matière plastique préexpansée est séchée et stabilisée, en ce que l'ouverture d'alimentation de la chambre (2) se trouve immédiatement sous l'ouverture de décharge de la chambre de préexpansion (1), en ce que l'ouverture d'alimentation peut être fermée de façon étanche, par exemple au moyen d'un obturateur (3), en ce qu'à l'intérieur de la chambre (2), est prévu un agitateur (4) et en ce qu'une pompe à vide (conduite 5) est raccordée à la chambre (2).

6. Dispositif suivant la revendication 5, caractérisé en ce qu'une cage (11) destinée à recevoir la matière plastique à sécher et à stabiliser se trouve à l'intérieur de la chambre (2) avec une certaine distance entre les parois de cette dernière et la cage.